# NEUE EUROPÄISCHE PATENTSCHRIFT

(11) **EP 1 595 214 B2**
(45) Veröffentlichungstag und Bekanntmachung des Hinweises auf die Entscheidung über den Einspruch: **30.05.2012**
(45) Hinweis auf die Patenterteilung: 02.05.2007
(21) Anmeldenummer: 04712040.7
(22) Anmeldetag: 18.02.2004
(51) Int. Cl.: G06F 13/42

(54) **VERFAHREN ZUM ÜBERTRAGEN VON DATEN ÜBER EINEN FELDBUS DER PROZESSAUTOMATISIERUNGSTECHNIK**
METHOD FOR TRANSFERRING DATA VIA A FIELD BUS OF THE PROCESS AUTOMATION TECHNOLOGY
PROCEDE POUR TRANSMETTRE DES DONNEES PAR UN BUS DE TERRAIN FONCTIONNANT SELON LA TECHNIQUE D'AUTOMATISATION DE PROCESSUS

(30) Priorität: 21.02.2003 DE 10307650
(43) Veröffentlichungstag der Anmeldung: 16.11.2005
(73) Patentinhaber: Endress + Hauser GmbH + Co. KG, 79689 Maulburg (DE); Endress+Hauser (Deutschland) AG+Co. KG, 79576 Weil am Rhein (DE)
(72) Erfinder: SEILER, Christian, 79424 Auggen (DE)
(74) Vertreter: Andres, Angelika Maria
(86) Internationale Anmeldenummer: PCT/EP2004/001534
(87) Internationale Veröffentlichungsnummer: WO 2004/075069

(56) Entgegenhaltungen:
- DE-A- 10 109 196
- DE-A- 19 739 297
- R. HUCK, E/A-KOLONIEN IM EX-BEREICH, IEE, 44. JAHRGANG 1999, Nr. 10, Seiten 22 - 24

## Beschreibung

Die Erfindung betrifft ein Verfahren zum Übertragen von Daten über einen Feldbus der Prozessautomatisierungstechnik gemäß dem Oberbegriff des Anspruchs 1.

In der Prozessautomatisierungstechnik werden häufig Feldgeräte eingesetzt, um einen industriellen Prozessablauf zu steuern.

Hierzu werden die Prozessvariablen mit Hilfe von Sensoren erfasst und die Regelgröße mit Hilfe von Aktoren gesteuert.

Feldgeräte zur Durchfluss-, Füllstands-, Differenzdruck-, Temperaturbestimmung etc. sind allgemein bekannt. Sie dienen zur Erfassung der entsprechenden Prozessvariablen Durchfluss, Füllhöhe, Druck, Temperatur etc. und sind meist in der unmittelbaren Nähe zu der betreffenden Prozesskomponente angeordnet.

Als Beispiele für Aktoren sind steuerbare Ventile zu nennen, die den Durchfluss einer Flüssigkeit oder eines Gases in einem Rohrleitungsabschnitt regeln.

Die Feldgeräte sind häufig über einen Feldbus mit einer Steuereinheit verbunden, die den gesamten Prozessablauf steuert. In den Steuereinheiten werden die Messwerte der einzelnen Sensoren ausgewertet und die entsprechenden Aktoren angesteuert.

Vielfach sind Feldbusse noch mit übergeordneten Kommunikationsnetzwerken verbunden, die zur Datenkommunikation mit Leitsystemen und Firmen- bzw. Büroeinrichtungen dienen. Dadurch ist eine durchgängige Kommunikation innerhalb einer Firma von der Feldebene bis in die verschiedenen Firmenebenen möglich. Neben einer eingeschränkten Kommunikation in den lokalen Netzwerken LAN ist bei einer entsprechenden Verbindung auch eine weltweite Kommunikation über das Internet WAN möglich.

In den Leitsystemen wird der Prozessablauf überwacht und visualisiert. Fehlermeldungen werden dort registriert. Vom Leitsystem aus ist auch ein direkter Zugriff auf die einzelnen Feldgeräte möglich. So können Parameterwerte und Konfigurationsdaten abgefragt und geändert werden. Weiterhin können auch vom Leitsystem aus Diagnosefunktionen aufgerufen werden.

Aus dem Artikel: Profibus Profile HART, Version 1.0, Juli 2001, Bestellnummer 3.102, Seiten 1-17, Copyright 2001 Profibus Nutzerorganisation e.V., Karlsruhe (DE) ist eine Systemarchitektur bekannt geworden, die einen Profibus DP Master (Klasse 1) und einen Profibus DP Master (Klasse 2) umfasst. Des weiteren ist ein HART Master Gerät vorgesehen, das aus einem Profibus DP Slave und einem HART Master besteht. Das HART Master Device Gerät besteht aus einem Profibus DP Slave, einem oder mehreren HART Masters und dem Profibus DP Profil für HART als Schnittstelle.

Neuerdings sind in der Prozessautomatisierungstechnik auch Systeme bekannt, bei denen auf den Feldbus verzichtet wird und die Feldgeräte direkt mit einem übergeordneten Kommunikationsnetzwerk verbunden sind. Das am meisten verbreitetste Netzwerk ist Ethernet mit TCP/IP. Dadurch ist eine Kompatibilität innerhalb verschiedener Firmenebenen und darüber hinaus auch mit dem Internet möglich.

Über das Firmennetzwerk werden so Emails und Prozessdaten gleichzeitig übertragen.

Die übergeordneten Firmennetzwerke die auf Ethernet basieren, arbeiten nach dem Client/Server-Prinzip. Feldbusse dagegen nach dem Publisher/Subscriber-Prinzip. Entsprechend sind die Protokolle ausgelegt.

Die Stärken von Ethernet mit TCP/IP liegen in der Überwachung/ Parametrierung von Anlagen bzw. Anlagen teilen. Für die Steuerung mit verteilter Intelligenz sind dagegen Feldbusse besser geeignet.

Heutzutage ist kein Verfahren zur Datenübertragung bei Feldbussen bekannt, das beiden Anforderungen gerecht wird. Aufgabe der Erfindung ist es deshalb ein Verfahren zur Datenübertragung über einen Feldbus der Prozessautomatisierungstechnik anzugeben, das sowohl für Steuerungsaufgaben und auch für Überwachungsaufgaben geeignet ist.

Gelöst wird diese Aufgabe durch das in Anspruch 1 angegebene Verfahren. Die wesentliche Idee der Erfindung besteht darin, dass die Protokolldaten eines zweiten Übertragungsprotokolls, des Internetprotokolls, auf das Feldbusprotokoll abgebildet werden und so über den Feldbus übertragen werden können.

In einfacher Weise enthält das Datenfeld im Frame des Feldbustelegramms ein Frame eines zweiten Übertragungsprotokolls.

Um die Daten im Feldgerät anwendungsspezifisch verteilen zu können, ist im Feldgerät ein Verteilermodul vorgesehen, das die eingehenden Feldbustelegramme analysiert und entsprechend ihrem Inhalt an die jeweilige Anwendung weiterleitet.

Bei dem Feldbussystem handelt es sich beispielsweise um einen Profibus® bzw. einem Foundation Fieldbus® handeln.

In einfacher Weise kann so ein Web-Server im Feldgerät implementiert werden.

Um die Kommunikation mit den weltweit vorhandenen Telekommunikationsnetzwerken zu ermöglichen, ist ein Verpackungsgateway vorgesehen, das die Protokolldaten des zweiten Übertragungsprotokolls in das Feldbusprotokoll abbildet bzw. in umgehrter Richtung diese entpackt.

Ein wesentlicher Vorteil der Erfindung besteht darin, dass zum Abfragen und Konfigurieren von Feldgeräten keine Spezialtools mehr notwendig sind. Der Zugriff ist mittels Standard-Browsern (Netscape Navigator®, Internet Explorer®) möglich. Gleichzeitig können dem erfindungsgemäßen Verfahren die Vorteile herkömmlicher Feldbusse weiterhin genutzt werden.

Zur Parametrierung und Konfigurierung von Feldgeräten stehen verschiedene Tools zur Verfügung. Ein derartiges Tool ist z. b. das Konfigurier- und Parametrierprogramm CommunWin 2 der Firma Endress + Hauser. Die Funktionalität der zu bedienenden Feldgeräte wird in diesen Bedientools mit Hilfe von sogenannten Gerätebeschreibungen (Device Descriptions) bekannt gemacht.

Vorteilhafte Weiterentwicklungen der Erfindung sind in den Unteransprüchen angegeben.

Nachfolgend ist die Erfindung anhand eines in der Zeichnung dargestellten Ausführungsbeispiels näher her erläutert.

Es zeigen:
- Fig. 1: Hardware- Softwarestruktur eines erfindungsgemäßen Feldgerätes;
- Fig. 2: Netzwerk mit Bediengerät und mehreren Feldgeräten in schematischer Darstellung;
- Fig. 3: Aufbau eines Feldbusframes.

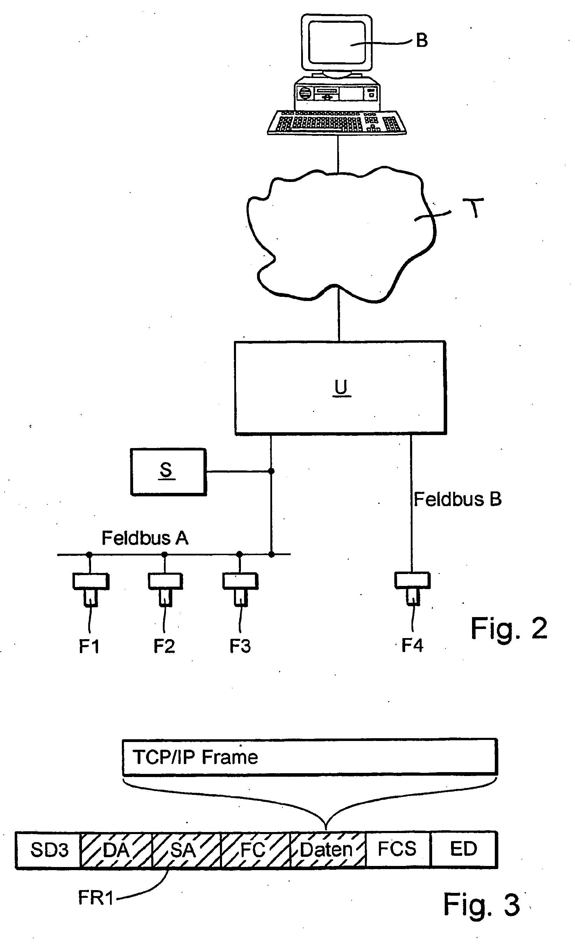

Fig. 2 zeigt ein Bediengerät B, das über mehrere Netzwerke mit verschiedenen Feldgeräten F1, F2, F3 und F4 verbunden ist. Als erste Netzwerkverbindung zwischen dem Bediengerät B und einem Umsetzeinheit U dient eine herkömmliche Kommunikationsverbindung T. Bei dieser Kommunikationsverbindung T kann es sich um ein WAN Wide-Area-Network (Internet), LAN Local-Area-Network (Intranet) oder eine direkte Internetprotokollverbindung handeln. Diese Verbindung wird über die bekannten Dienste GSM, UMTS, PSTN, ISDN, Ethernet etc. bereit gestellt.

Von der Umsetzeinheit U führen zwei Feldbusse A und B zur Feldebene mit drei Feldgeräten F1, F2, F3 und einem Feldgerät F4. An dem Feldbus A ist noch eine Steuereinheit S (z. B. eine speicherprogrammierbare Steuerung SPS) angeschlossen. Über den Feldbus A kommunizieren die Feldgeräte F1, F2, F3 mit der Steuereinheit S, die die Messwerte der einzelnen Feldgeräte auswertet und nicht dargestellte Aktoren entsprechend ansteuert.

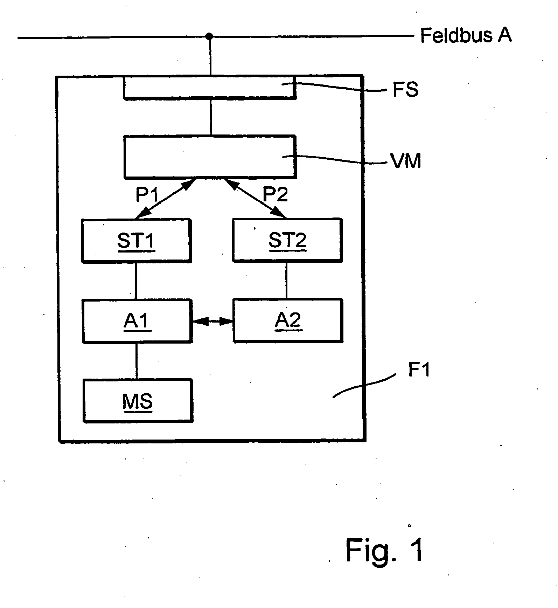

Fig. 1 zeigt die Hardware- Softwarestruktur eines erfindungsgemäßen Feldgeräts (F1, F2, F4) anhand des beispielhaft ausgewählten Feldgeräts F1. (Bei dem Feldgerät F3 handelt es sich um ein herkömmliches Feldgerät.) Das Feldgerät F1 ist mit dem Feldbus A über eine Feldbusschnittstelle FS verbunden. Ein Verteilermodul VM, das der Feldbusschnittstelle FS nachgeschaltet ist, verteilt Protokolldaten P1 bzw. P2 entweder zum Kommunikationsstack ST1 oder ST2. Den beiden Stacks ST1 bzw. ST2 sind jeweils die entsprechenden Anwendungen A1 bzw. A2 nachgeschaltet. Die Anwendung A2 ist einer nicht näher dargestellten Messaufnehmerschnittstelle MS verbunden. Zwischen den Anwendungen A1 und A2 ist ein Datenaustausch möglich. Herkömmliche Feldgeräte wie das Feldgerät F3 weisen nur die Feldbusschnittstelle FS, den Kommunikationsstack ST1 und die Feldbusanwendung A1 sowie die Messaufnehmerschnittstelle MS auf.

Fig. 3 zeigt einen Feldbusframe FR1 mit einem normalen Datenfeld bzw. mit einem Frame eines weiteren Übertragungsprotokolls. Beispielhaft gezeigt ist ein Profibusframe, das einen TCP/IP Frame enthält.
Der Profibusframe FR1 besteht aus mehreren Datenfeldern; SD3 Startbegrenzer, DA Zieladresse, SA Senderadresse, FC Funktionscode, Daten, FCS Frame-Checksumme und dem Endbegrenzter ED. Das Datenfeld Daten kann z. B. normale Messwerte bzw. auch einen TCP/IP Frame mit den entsprechenden Daten enthalten.

Nachfolgend ist die Funktionsweise der Erfindung mehr erläutert.

Die Feldbusanwendung A1 kann in gewohnter Weise mit der Steuereinheit S über den Feldbus A kommunizieren. Die von der Feldbusanwendung A1 bereitgestellten Daten werden in mit Hilfe des Feldbusstacks ST1 verpackt und über das Verteilermodul VM und die Feldbusschnittstelle FS auf den Feldbus A gegeben. Das Verteilermodul VM reicht den Feldbusframe FR1, der normale Feldbusdaten enthält, ohne Veränderung an die Feldbusschnittstelle FS weiter. Eingehende Telegramme werden im Verteilermodul VM dahingehend analysiert, ob im Datenfeld Feldbusdaten P1 oder Protokolldaten P2 eines anderen zweiten Übertragungsprotokolls enthalten sind. Im einen Fall werden die Protokolldaten an den Feldbusstack ST1 weitergeleitet, im anderen Fall an den Kommunikationsstack ST2. Die Daten gelangen dann entweder zur Feldbusanwendung A1 oder zur Anwendung A2. Die Anwendung A2 kann z. B. einen Web-Server oder einen OPC-Server umfassen.
Selbstverständlich können Feldgeräte Daten entsprechend dem ersten oder zweiten Protokoll austauschen. So können entsprechende Anwendungen in den jeweiligen Feldgeräten miteinander sehr einfach miteinander kommunizieren.

Nachfolgend ist die Funktionsweise der Umsetzeinheit U näher beschrieben. Die Umsetzeinheit U, die als Verpackungsgateway dient, verpackt die TCP/IP Protokolldaten in das Feldbusprotokoll und gibt sie an die entsprechende Feldbusse A bzw. B weiter. Entsprechend werden Feldbustelegramme vom Feldbus entpackt und als TCP/IP Telegramme an die entsprechende Kommunikationsverbindung T weitergegeben.
Die Umsetzeinheit U kann mit einem oder mehreren Feldbussen, die insbesondere auch nach unterschiedlichen Protokollen arbeiten, verbunden sein.
Ebenso können an die Umsetzeinheit U ein oder mehrere unterschiedliche Netzwerke, die nach dem zweiten Übertragungsprotokoll arbeiten, angeschlossen werden.

Mit dem Bediengerät B ist somit ein einfacher Zugriff auf die entsprechenden Feldgeräte möglich. Über einen Web-Browser können die Feldgeräte F1, F2 bzw. F4 vom Bediengerät B aus, konfiguriert und parametriert werden. Ein wesentlicher Vorteil der Erfindung ist darin zu sehen, dass das Bediengerät B direkt auf die im Feldgerät F1, F2 bzw. F4 gespeicherten HTML-Seiten zugreifen können. Das Bediengerät B benötigt keine spezielle Gerätebeschreibung des Feldgerätes, das bedient werden soll.

Mit Hilfe der vorliegenden Erfindung ist es möglich, TCP/IP Anwendungen in Feldgeräten zu installieren, ohne Änderung an dem bestehenden Feldbus vornehmen zu müssen. Feldgeräte ohne TCP/IP Anwendungen und Feldgeräte mit TCP/IP Anwendungen arbeiten unabhängig voneinander. Ein wesentlicher Vorteil der Erfindung ist noch darin zu sehen, dass TCP/IP Anwendungen über einen Zweitdrahtanschluss mit einem weit entfernten Bediengerät kommunizieren können. Derartige Feldgeräte können auch in explosionsgefährdeten Bereichen (EX-Bereiche) einfach eingesetzt werden.

Die Umsetzeinheit U kann auch als Firewall dienen und verschiedene Dienste auf Basis des zweiten Übertragungsprotokolls für die Feldgeräte F1, F2, F4 zur Verfügung stellen.

Weiterhin kann die Umsetzeinheit auch als Router zwischen den verschiedenen angeschlossenen Netzwerken dienen.

## Patentansprüche

1. Verfahren zum Übertragen von Daten über einen Feldbus der Prozessautomatisierungstechnik mit einem Sensor/Aktor (F1), in dem ein erstes Anwendungsprogramm (A1) für ein erstes Feldbusprotokoll abläuft, das Daten in Feldbustelegrammen über eine Feldbusschnittstelle (FS) des Sensors/Aktors (F1) mit dem Feldbus (A, B) nach dem ersten Feldbusprotokoll austauscht, wobei ein zweites Anwendungsprogramm (A2) für ein zweites Übertragungsprotokoll im Sensor/Aktor (F1) vorgesehen ist, wobei es sich bei dem zweiten Übertragungsprotokoll um das Internet Protokoll, bekannt auch als IP-Standard, handelt, wobei die Protokolldaten des Internet Protokolls auf das erste Feldbusprotokoll abgebildet werden und als Feldbustelegramme über die Feldbusschnittstelle (FS) übertragen werden.

2. Verfahren nach Anspruch 1, **dadurch gekennzeichnet, dass** die Abbildung der Protokolldaten des zweiten Übertragungsprofokolls auf das erste Feldbusprotokoll **dadurch** erfolgt, dass im Datenfeld eines Feldbusframes des Feldbustelegramms ein Frame des zweiten Übertragungsprotokolls enthalten ist.

3. Verfahren nach Anspruch 2, **dadurch gekennzeichnet, dass** ein Verteilermodul (VM) im Sensor/Aktor vorgesehen ist, das die eingehenden Feldbustelegramme analysiert und entsprechend ihrem Inhalt an die jeweilige Anwendung (A1) bzw. (A2) weiterleitet.

4. Verfahren nach einem der vorhergehenden Ansprüche, **dadurch gekennzeichnet, dass** das erste Feldbusprotokoll dem Profibus-Standard oder Fieldbus Foundation-Standard entspricht.

5. Verfahren nach einem der vorhergehenden Ansprüche, **dadurch gekennzeichnet, dass** das zweite Anwendungsprogramm (A2) einen Web-Server umfasst.

6. Verfahren nach einem der vorhergehenden Ansprüche, **dadurch gekennzeichnet, dass** zwei oder mehrere Feldgeräte miteinander entweder über das erste oder das zweite Übertragungsprotokoll Daten austauschen und damit verschiedene erste oder zweite Anwendungen in den Sensoren/Aktoren miteinander kommunizieren.

## Claims

1. A method for transmitting data via a field bus of process automation technology, having a sensor/actuator (F1) in which a first application program (A1) for a first field bus protocol is executed, which exchanges data in field bus telegrams with the field bus (A, B) according to the first field bus protocol via a field bus interface (FS) of the sensor/actuator (F1), wherein a second application program (A2) for a second transmission protocol is provided in the sensor/actuator (F1), wherein the second transmission protocol is the Internet Protocol, also known as the IP standard, wherein the protocol data of the Internet Protocol are mapped onto the first field bus protocol and transmitted as field bus telegrams via the field bus interface (FS).

2. A method according to Claim 1, **characterized in that** the mapping of the protocol data of the second transmission protocol onto the first field bus protocol is effected **in that** a frame of the second transmission protocol is contained in the data field of a fieldbus frame of the field bus telegram.

3. A method according to Claim 2, **characterized in that** a distributor module (VM) is provided in the sensor/actuator, which analyses the incoming field bus telegrams and forwards them to the respective application (A1 or (A2) according to their content.

4. A method according to one of the preceding claims, **characterized in that** the first fieldbus protocol corresponds to the PROFIBUS standard or Fieldbus Foundation Standard.

5. A method according to one of the preceding claims, **characterized in that** the second application program (A2) comprises a Web server.

6. A method according to one of the preceding claims, **characterized in** the two or more field devices exchange data with one another, either via the first or the second transmission protocol, and therefore different first or second applications communicate with one another in the sensors/actuators.

## Revendications

1. Procédé destiné à la transmission de données par l'intermédiaire d'un bus de terrain de la technique d'automatisation des process avec un capteur / actionneur (F1), dans lequel est exécuté un premier programme d'application (A1) pour un premier protocole de bus de terrain, qui échange des données dans des télégrammes de bus de terrain via une interface bus de terrain (FS) du capteur / actionneur (F1) avec le bus de terrain (A, B) d'après le premier protocole de bus de terrain, un deuxième programme d'application (A2) étant prévu pour un deuxième protocole de transmission dans le capteur / actionneur (F1), le deuxième protocole de transmission s'agissant du protocole Internet, également connu en tant que standard IP, les données du protocole Internet étant dupliquées sur le premier protocole de bus de terrain et les télégrammes de bus de terrain étant transmis via l'interface bus de terrain (FS).

2. Procédé selon la revendication 1, **caractérisé en ce que** la duplication des données du deuxième protocole sur le premier protocole de bus de terrain, qui contient dans le champ de données d'une trame d'un télégramme de bus de terrain, une trame du deuxième protocole de bus de terrain.

3. Procédé selon la revendication 2, **caractérise en ce qu'**est prévu dans le capteur / actionneur un module répartiteur (VM), qui analyse les télégrammes de bus de terrain entrants et les transmet selon leur contenu à l'application respective (A1) ou (A2).

4. Procédé selon l'une des revendications précédentes, **caractérisé en ce que** le premier protocole de bus de terrain correspond au standard Profibus ou au standard Fieldbus Foundation.

5. Procédé selon l'une des revendications précédentes, **caractérise en ce que** la deuxième application (A2) comprend un serveur Web.

6. Procédé selon l'une des revendications précédentes, **caractérisé en ce que** deux ou trois appareils de terrain échangent des données entre eux, par l'intermédiaire du premier ou du deuxième protocole de transmission et, ainsi, **en ce que** différentes premières ou deuxièmes applications communiquent entre elles dans les capteurs / actionneurs.
